# EUROPEAN PATENT SPECIFICATION

(11) **EP 1 541 704 B1**
(45) Date of publication and mention of the grant of the patent: **26.08.2009**
(21) Application number: 03741124.6
(22) Date of filing: 25.06.2003
(51) Int. Cl.: C22F 1/04

(54) **PROCESS FOR PRODUCING ALUMINUM MATERIAL FOR ELECTROLYTIC CAPACITOR ELECTRODE**
VERFAHREN ZUR HERSTELLUNG VON ALUMINIUMMATERIAL FÜR EINE ELEKTRODE EINES ELEKTROLYTISCHEN KONDENSATORS
PROCEDE PERMETTANT DE PRODUIRE UN MATERIAU D'ALUMINIUM POUR UNE ELECTRODE DE CONDENSATEUR ELECTROLYTIQUE

(30) Priority: 28.06.2002 JP 2002188860; 22.11.2002 JP 2002338765; 12.12.2002 JP 2002361131; 14.04.2003 US 462333 P; 21.05.2003 JP 2003144058
(43) Date of publication of application: 15.06.2005
(73) Proprietor: Showa Denko K.K., Tokyo 105-8518 (JP)
(72) Inventor: HOZUMI, Satoshi c/o Sakai Regional Office, Sakai-shi, Osaka 590-0982 (JP); SAKAGUCHI, Masashi c/o Sakai Regional Office, Sakai-shi, Osaka 590-0982 (JP); AKAGI, Nobuhiko c/o Sakai Regional Office, Sakai-shi, Osaka 590-0982 (JP)
(74) Representative: Viering, Jentschura & Partner
(86) International application number: PCT/JP2003/008113
(87) International publication number: WO 2004/003248

(56) References cited:
- JP-A- 8 319 547
- JP-A- 10 008 225
- JP-A- 11 043 749
- US-A- 3 716 419
- US-A- 4 609 408
- PATENT ABSTRACTS OF JAPAN vol. 2000, no. 23, 10 February 2001 (2001-02-10) -& JP 2001 155970 A (SHOWA ALUM CORP), 8 June 2001 (2001-06-08)
- PATENT ABSTRACTS OF JAPAN vol. 1998, no. 05, 30 April 1998 (1998-04-30) -& JP 10 008225 A (SHOWA ALUM CORP), 13 January 1998 (1998-01-13)

## Description

### Field of the Invention

The present invention relates to a method for manufacturing aluminum material for electrolytic capacitor electrodes according to the preamble of claim 1. Such a method is known, for example, from JP 2001 155970A.

In this disclosure, the wording of -aluminum- is used to include the meaning of aluminum and its alloy, and "aluminum material" includes at least an aluminum foil, an aluminum plate and a formed article thereof.

### Description of the Background Art

The following description sets forth the inventor's knowledge of related art and problems therein and should not be construed as an admission of knowledge in the prior art.

Conventionally, aluminum material for electrolytic capacitor electrodes, e.g. , anode material for use in electrolytic capacitors for middle and high voltage, is manufactured by subjecting an aluminum ingot with aluminum purity of 99.8 % or more to hot rolling first cold rolling, intermediate annealing, second cold rolling and final annealing in this order. This anode material for electrolytic capacitors for middle and high voltage is subjected to electrolytic etching to form tunnel-like pits and then subjected it to chemical forming. Accordingly, in order to obtain anode material with high capacitance, aluminum material should be good in etching properties. Therefore, it has been attempted to improve the etching properties from various points of view.

Regarding the relationship between electrolytic etching properties and microstructure in aluminum material, it is well known that the higher the number of cube-oriented grain is, or the higher the area fraction of cube orientation is, the surface area of the aluminum material can enlarge efficiently, which in turn can obtain higher capacitance. As a method for obtaining aluminum material with high area fraction of cube orientation, for example, the following methods have been provided.

Patent document 1 (Japanese Examined Laid-open Patent Publication No. S54-11242) discloses a method for obtaining aluminum material with high area fraction of cube orientation. In this method, after first cold rolling at a high cold rolling rate of curing of 1,000% or more, a material is subjected to intermediate annealing at 180 to 350 °C. then to second cold rolling at a rolling reduction of 5 to 35%, and thereafter subjected to final annealing to thereby obtain aluminum material with high area fraction of cube orientation.

Furthermore, Patent document 2 (Japanese Unexamined Laid-open Patent Publication No. H06-145923) discloses a method for obtaining aluminum material with high area fraction of cube orientation. In this method, after first cold rolling at a high rolling reduction of 90% or more, a material is subjected to intermediate annealing, then to second cold rolling at a rolling reduction of 10 to 40%, wherein between the steps from the initiation of the second cold rolling to the initiation of the final annealing the tensile strain is adjusted so as to fall within the range of 0.2 to 5.0% to thereby obtain aluminum material with high area fraction of cube orientation.

In these methods, the texture is controlled by carrying out second cold rolling at a low rolling reduction after intermediate annealing to thereby increase the area fraction of cube orientation.

On the other hand, in recent years, a requirement for enhancing capacitor performance, i.e., a requirement for improving capacitance of electrode material, has been increased rapidly. As one of methods for obtaining high capacitance, a method in which a surface area is increased by increasing the etching pit length (depth) can be exemplified. At this time, a non-etching portion which is a core portion of anode material cannot be decreased in thickness so as to secure the bending strength of the material after etching. Therefore, in order to increase the surface area by increasing the etching pit, it is necessary to increase the thickness of the anode material.

Conventionally, in general, as aluminum material for electrolytic capacitor anodes, aluminum material having a thickness of about 100 µm is used. Therefore, in order to obtain high capacitance by increasing a thickness, it is necessary to develop material having a thickness exceeding 100 µm.

In the method disclosed by the aforementioned Patent documents, however, since second cold rolling is carried out after intermediate annealing, before the final annealing, it was necessary to perform degreasing for removing the lubricant used at the second cold rolling. Furthermore, since the second cold rolling was low in rolling reduction and the amount of lubricant adhered to the coiled material after the rolling is large, the degreasing agent tends to deteriorate and therefore the degreasing tank is easily polluted. As mentioned above, since the aforementioned conventional manufacturing methods require a number of steps and consume a large quantity of degreasing agent, and therefore it is required to simplify the steps.

In conventional general manufacturing methods including the aforementioned prior art in which intermediate annealing is performed after cold rolling and cold rolling is performed at a low rolling reduction after the intermediate annealing but before the initiation of the final annealing, if a thickness of the aluminum material becomes 110 µm or more, some coarsened grains occur at the final annealing. If the thickness further increases, some coarsened grains occur noticeably. Thus, it was difficult to control the microstructure. It is believed that the reasons for the above are largely affected by strain distribution in the material caused by the cold rolling performed after the intermediate annealing.

In many cases, the coarsening of grains occurs in grains other than cube-oriented grain. In such a case, portions with extremely low capacitance will be generated in the aluminum material, causing a big problem.

Under the circumstances, it has been required to provide a method for stably manufacturing aluminum material for electrolytic capacitor electrodes having a thickness of 110 µm or more in which the cubic occupancy rate is high without coarsened grains.

### SUMMARY OF THE INVENTION

The preferred embodiments of the present invention have been developed in view of the above-mentioned and/or other problems in the related art. Among other potential advantages, some embodiments can provide a method for manufacturing aluminum material having high area fraction of cube orientation by simplified steps.

Among other potential advantages, some embodiments can provide a method for manufacturing aluminum material for use in electrolytic capacitor electrodes in which the area fraction of cube orientation is high without coarsened grains by a method different from the aforementioned conventional methods.

In order to attain the aforementioned objects, a method for manufacturing aluminum material for use in electrolytic capacitor electrodes has the following structure as recited in the following Items (1) to (14).
(1) A method for manufacturing aluminum material for electrolytic capacitor electrodes, wherein an aluminum ingot is subjected to hot rolling, cold rolling and then intermediate annealing to obtain a rolled article, and wherein tensile strain within the range of 1 to 15% is applied to the rolled article without subjecting the rolled article to cold rolling after the intermediate annealing but before initiation of final annealing, and thereafter the rolled article is subjected to final annealing wherein the thickness of the aluminium material after final annealing is 230 µm or less.
(2) The method for manufacturing aluminum material for electrolytic capacitor electrodes as recited in the aforementioned Item (1), wherein the tensile strain falls within the range of 3 to 12%.
(3) The method for manufacturing aluminum material for electrolytic capacitor electrodes as recited in Item (1) or (2), wherein application of the tensile strain is performed using a tensile strain application equipment having two or more bridle roll units disposed in a transferring direction of the aluminum material for forming a tension applying area between adjacent bridle roll units in such a manner that between a peripheral speed Pi of an upstream-side bridle roll unit and a peripheral speed Po of a downstream-side bridle roll unit a peripheral speed difference of Pi<Po is provided so as to continuously generate plastic strain in the tension applying area.
(4) The method for manufacturing aluminum material for electrolytic capacitor electrodes as recited in the aforementioned Item (3), wherein the peripheral speeds Pi and Po meet a relation of 0<(Po-Pi)//Pi≦0.1.
(5) The method for manufacturing aluminum material for electrolytic capacitor electrodes as recited in the aforementioned Item (3) or (4), wherein the peripheral speed difference is generated by driving bridle rolls of the upstream-side bridle roll unit and those of the downstream-side bridle roll unit at different rotational speeds.
(6) The method for manufacturing aluminum material for electrolytic capacitor electrodes as recited in any one of the aforementioned Items (3) to (5), wherein the peripheral speed difference is generated by employing bridle rolls of the downstream-side bridle roll unit with a larger bridle roll diameter than a bridle roll diameter of bridle rolls of the upstream-side bridle roll unit.
(7) The method for manufacturing aluminum material for electrolytic capacitor electrodes as recited in any one of the aforementioned Items (1) to (6), wherein the tensile stain is applied at two positions or more in one pass for applying the tensile strain.
(8) The method for manufacturing aluminum material for electrolytic capacitor electrodes as recited in any one of the aforementioned Items (1) to (7), wherein the pass for applying the tensile strain is carried out a plurality of times.
(9) The method for manufacturing aluminum material for electrolytic capacitor electrodes as recited in any one of the aforementioned Items (3) to (6), wherein the tensile strain application equipment is a tension leveling device.
(10) The method for manufacturing aluminum material for electrolytic capacitor electrodes as recited in any one of the aforementioned Items (1) to (9) wherein the intermediate annealing and an application of the tensile strain are performed continuously.
(11) The method for manufacturing aluminum material for electrolytic capacitor electrodes as recited in any one of the aforementioned Items (1) to (10), wherein an application of the tensile strain and the final annealing are performed continuously.
(12) The method for manufacturing aluminum material for electrolytic capacitor electrodes as recited in any one of the aforementioned Items (1) to (11), wherein the method manufactures the aluminum material having a thickness of 110 to 230 µm
(13) The method for manufacturing aluminum material for electrolytic capacitor electrodes as recited in any one of the aforementioned Items (1) to (12), wherein the aluminum material is positive electrode material.
(14) The method for manufacturing aluminum material for electrolytic capacitor electrodes as recited in any one of the aforementioned Items (1) to (13), wherein the aluminum material is medium and high voltage positive electrode material.

With this method for manufacturing aluminum material for electrolytic capacitor electrodes according to the present invention, it is possible to stably obtain aluminum material for electrolytic capacitor electrodes having high area fraction of cube orientation and capable of restraining coarsening of grains. Accordingly, by subjecting this aluminum material to etching, it is possible to increase the surface increasing rate and capacitance.

Furthermore, since no lubricant agent is used at the tensile strain application step, it is possible to perform the final annealing without degreasing previously. Accordingly, degreasing. which is required in a conventional manufacturing method in which cold rolling is performed using lubricant agent after the intermediate annealing, can be eliminated. This enables manufacturing of aluminum material having high area fraction of cube orientation in simplified steps. Furthermore, since degreasing step can be eliminated, it becomes unnecessary to manage agents or tanks for degreasing operations.

Since the tensile strain falls within/the range of 1 to 15%, it is possible to obtain especially high area fraction of cube orientation.

In cases where the tensile strain falls within the range of 3 to 12%, it is possible to obtain higher area fraction of cube orientation.

In cases where an application of the tensile strain is performed using a tensile strain application equipment having two or more bridle roll units disposed in a transferring direction of the aluminum material for forming a tension applying area between adjacent bridle roll units in such a manner that between a peripheral speed Pi of an upstream-side bridle roll unit and a peripheral speed Po of a downstream-side bridle roll a peripheral speed difference of Pi<Po is provided so as to continuously generate plastic strain in the tension applying area, an application of tensile strain can be performed efficiently.

In cases where the peripheral speeds P1 and Po meet a relation of 0<( Po-Pi) /Pi≦ 0.1, predetermined tensile strain can be applied without causing any scratches or breaking of aluminum material.

The peripheral speed difference can be generated by driving bridle rolls of the upstream-side bridle roll unit and those of the downstream-side bridle roll unit at different rotational speeds.

The peripheral speed difference can be generated by employing bridle rolls of the downstream-side bridle roll unit with a larger bridle roll diameter than a bridle roll diameter of bridle rolls of the upstream-side bridle roll unit.

The tensile stain can be applied at two positions or more in one pass for applying the tensile strain.

Furthermore, the pass for applying the tensile strain can be carried out a plurality of times.

As the tensile strain application equipment, a tension leveling device can be used. In this case, leveling of shape defects such as flatness and an application of tensile strain can be performed.

By performing the intermediate annealing and an application of the tensile strain continuously, the aluminum material can be manufactured efficiently.

By performing an application of the tensile strain and the final annealing continuously, the aluminum material can be manufactured efficiently.

In the case of manufacturing aluminum material having a thickness of 110 to 230 µm which easily tends to cause coarsening of grains, the significance of applying the present invention for restraining the growth of crystal strains further increases.

### BRIEF DESCRIPTION OF THE DRAWINGS

Fig. 1 is a schematic view showing an embodiment of a tensile strain application equipment to be used in a method for manufacturing aluminum material for electrolytic capacitor electrodes according to the present invention;
Fig. 2 is a schematic view showing another embodiment of a tensile strain application equipment;
Fig. 3 is a schematic view showing an example of steps for manufacturing aluminum material for electrolytic capacitor electrodes according to the present invention.
Fig. 4 is a schematic view showing another example of steps for manufacturing aluminum material for electrolytic capacitor electrodes according to the present invention.

### DETAILED DESCRIPTION OF THE PREFERRED EMBODIMENTS

In the method for manufacturing aluminum material for electrolytic capacitor electrodes, in order to apply strain to the material after intermediate annealing in the thickness direction as evenly as possible, tensile strain is given after the intermediate annealing without performing cold rolling after the intermediate annealing and then final annealing is performed. Through the aforementioned steps, it becomes possible to obtain aluminum material for electrolytic capacitor electrodes, with a thickness of 230 µm or less especially 110 to 230 µm in thickness, high in area fraction of cube orientation and restrained in coarsening of grains

Although even small amount of the aforementioned tensile strain can enhance the area fraction of cube orientation, tensile strain of 1% or more is applied to obtain a higher area fraction of cube orientation. On the other hand, an application of excessive tensile strain may cause breaking of aluminum material, and therefore tensile strain of 15% or less is applied. It is preferable to apply tensile strain by 3 to 12%, more preferably exceeding 5% but not exceeding 10%. The aluminum material to which tensile strain is given is subjected to final annealing. This causes growth of cube-oriented grains, and a high area fraction of cube orientation can be obtained eventually.

A method for applying tensile strain is not specifically limited. For example, the following method can be exemplified. In this method, aluminum material wound on an unwinding coil is wound on a winding coil by unwinding the aluminum material from the unwinding coil while applying brake to the unwinding coil to thereby apply tensile strength to the aluminum material between the unwinding coil and the winding coil.

The application of tensile strength can be performed by one-axis tension in which tensile strength is applied to the aluminum material only in one direction, e.g., in a longitudinal direction, or two-axis tension in which tensile strength is applied to the aluminum material in different two directions, for example, in the longitudinal direction and the widthwise direction. Alternatively, the application of tensile strain can be performed by bending the aluminum material.

As an especially efficient method for applying tensile strain, it can be recommended to employ a method using a tensile strain application equipment having two or more bridle roll units disposed in the transferring direction of the aluminum material for forming tension applying area between the adjacent bridle roll units.

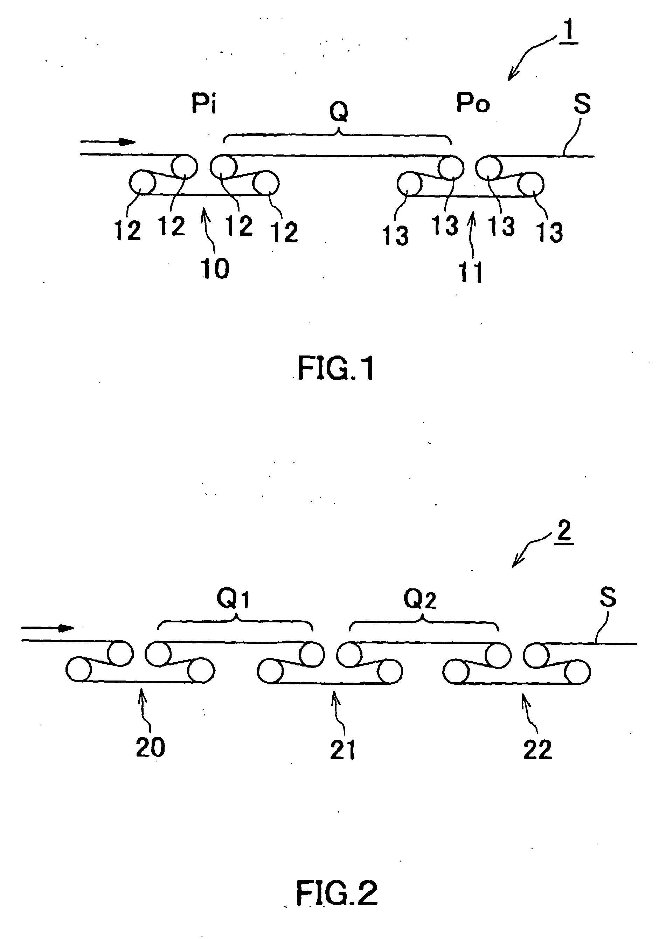

Fig. 1 is a schematic view showing an embodiment of the tensile strain application equipment. A method for applying tensile strain using this device will be detailed as follows.

The tensile strain application equipment 1 has two bridle roll units, or an upstream side bridle roll unit 10 and a downstream side bridle roll unit 11 disposed at the upstream side and downstream side in the transferring direction of the aluminum material S respectively. A tension applying area Q is formed between the two bridle roll units 10 and 11. The peripheral speed Pi in the upstream side bridle roll unit 10 and the peripheral speed Po in the downstream side bridle roll unit 11 are set to be Pi<Po. This peripheral speed difference causes continuous plastic strain of the aluminum material S at the tension applying area Q, which applies tensile strain to the aluminum material S. In this embodiment, although the upstream side bridle roll unit 10 and the downstream side bridle roll unit 11 are constituted by four bridle rolls 12, 12, 12, 12 and 13, 13, 13, 13, respectively, the number of rolls and the layout of rolls are not limited to this embodiment and can be set arbitrary.

Furthermore, it is preferable that the aforementioned peripheral speed Pi, Po meets the relation of 0<(Po-P1)/P1≦0.1, more preferably 0.01≦(Po-P1)/Pi≦ 0.1. As long as the relation meets Pi<Po, or the relation meets 0<(Po-Pi)/Pi, a peripheral speed difference is obtained to thereby enable an application of tensile strain. Furthermore, in the case of 0.01≦(Po-Pi)/Pi, an application of tensile strain can be carried out more efficiently. However, in the case of (Po-Pi)/Pi>0.1, the possibility of causing scratches on the surface of the aluminum material due to a slip or breaking of the aluminum material will increase. Accordingly when a relation of (Po-Pi)/Pi≦0.1 is met, a prescribed application of tensile strain can be carried out without causing scratches or breaking of the aluminum material.

The aforementioned peripheral speed difference can be caused by, for example, driving the bridle roll 12 of the upstream side bridle roll unit 10 and the bridle roll 13 of the downstream side bridle roll unit 11 at different rotational speed or by employing the bridle roll 13 of the downstream side bridle roll unit 11 having a diameter larger than the diameter of the bridle roll 12 of the upstream side bridle roll unit 10. Furthermore, the peripheral speed difference can also be obtained by differentiating both the rotational speeds and the diameters of the bridle rolls 12 and 13.

Furthermore, the number of applying tensile strain is not limited to one time but can be a plurality of times. In cases where large tensile strain is given, it is preferable to apply tensile strain a plurality of times because of the following reason. That is, depending on the surface condition of the material to be transferred, the chances of causing slips at the contact surface between the surface of the aluminum material S and the bridle rolls become high, resulting in scratches, and wrinkling of the aluminum material S tend to be easily generated at the tension applying area Q. Accordingly, in such a case, it is preferable to apply tensile strain plural times separately. The generation of wrinkling can be suppressed by, for example, using rolls for restraining the material at the tension applying area.

In cases where tensile strain are applied to the aluminum material plural times using the aforementioned tensile strain application equipment 1 having one tension applying area Q, the application of tensile strain can be attained by passing the aluminum material through the tensile strain application equipment 1 plural times (i.e., plural passes). Multiple applications of tensile strain can be attained by passing the aluminum material through a tensile strain application equipment one time (i.e. , one pass) using, for example, the tensile strain application equipment 2 shown in Fig. 2. This device 2 has three bridle roll units 20, 21, 22 which form two tension applying areas Q1 and Q2 between adjacent bridle roll units 20, 21 and 21 and 22. Disposing this device 2 in the transferring passage of the aluminum material S enables two applications of tensile strain by one pass. As will be apparent from the above explanation, by increasing the number of bridle roll units so that applications of tensile strain can be performed at two portions or more, plural applications of tensile strain to the aluminum material can be carried out by one pass. Furthermore, a pass in which one pass enables plural applications of tensile strain can be performed a plurality of times. Although in the aforementioned tensile application device 2 one bridle roll unit 21 is used to form two consecutive tension applying areas Q1 and Q2, two tension applying areas can be formed discontinuously without forming two tensile applying areas by one bridle roll unit.

As the aforementioned tensile strain application equipment 1 and 2, a conventional tension leveling device can be used. That is, using a leveling device for leveling badness of shapes such as flatness by plastically deforming a part of a strip cross-section by tensile force not larger than the yield point and increased stress by bending, predetermined tensile strain can be given to a strip by adjusting the bridle roll peripheral speed conditions as mentioned above. Accordingly, by a tension leveling device, leveling of flatness and application of predetermined tensile strain can be performed.

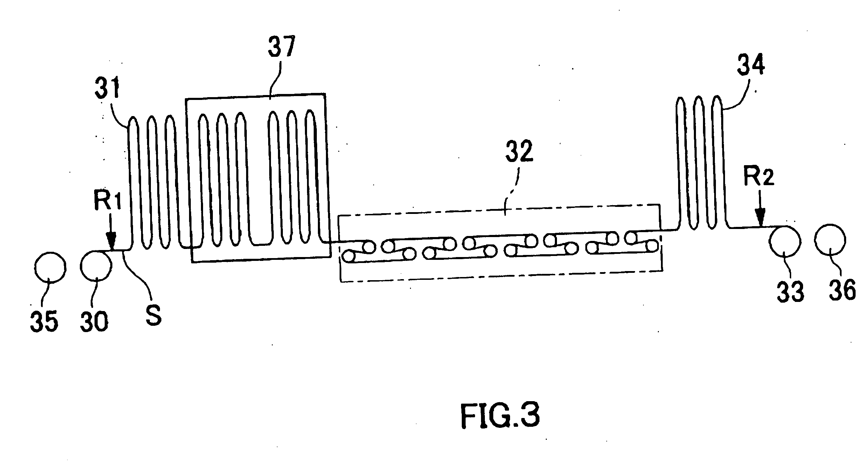

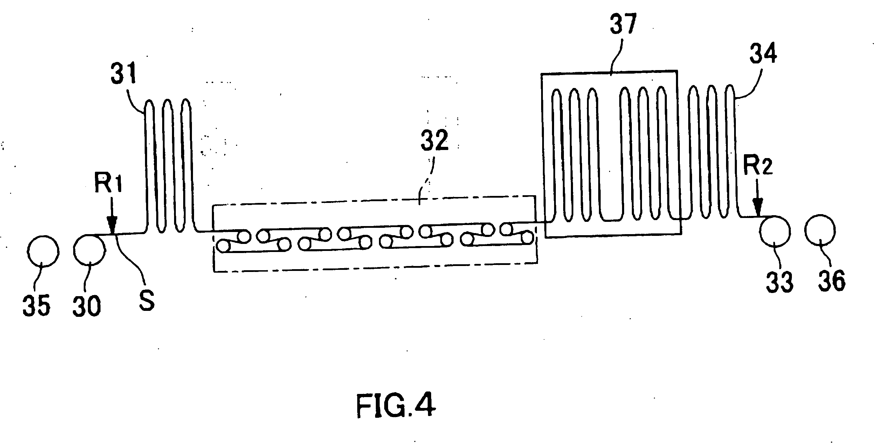

A method for supplying the aluminum material to the aforementioned tensile strain application equipment and carrying out the aluminum material after the application of tensile strain is not specifically limited. In the steps illustrated in Figs. 3 and la looper 31 is provided at the downstream side of an unwinding device 30. A coil connection is performed at the downstream side R1 of the unwinding device 30 while transferring aluminum material S at a certain rate so that the aluminum material is continuously supplied to the tensile strain application equipment 32 from a plurality of coils. Provided at the upstream side of a winding device 33 is a looper 34. The aluminum material S to which tensile strain is applied is cut at the upstream side R2 of the winding device 33 while transferring the aluminum material at a certain rate so that coiled aluminum material is continuously carried out. In Figs. 3 and 4, the reference numeral 35 denotes a standby coil to be loaded to the unwinding device 30, the reference numeral 36 denotes a divided coil, and the reference numeral 37 denotes an annealing furnace. The aforementioned continuous processing can eliminate a time loss for exchanging coils at the unwinding device 30 and the winding device 33.

The tensile strain application is not necessarily limited to be performed at one step or at one time. Accordingly, even if the tensile strain application is performed at several steps or performed several times, there will be no problem. In general, an application of tensile strain is performed after intermediate annealing which is generally performed at 200 to 300 °C but before initiation of final annealing which is generally performed at 450° C or above. Before or after the application of tensile strain, steps of washing or slitting the aluminum material can be performed. Furthermore, at least one of an intermediate annealing step, a washing step, a slitting step and a final annealing step and a step of applying tensile strain can be performed continuously in one device or can be performed simultaneously.

The intermediate annealing is generally performed at 200 to 300 °C, and can be performed quickly as the temperature raises. However, the important things are properties of the aluminum material after the intermediate annealing. If the intermediate annealing is performed at a high temperature or for a long time period to excessively recrystallize the aluminum material, or excessively soften the aluminum material, it becomes difficult to preferentially grow cube-oriented grains at the final annealing, resulting in deteriorated area fraction of cube orientation. To the contrary, if the intermediate annealing is performed at a low temperature or for a short time period to excessively restrain recrystallization of the aluminum material, or excessively restrain softening of the aluminum material, the number of nuclei of cube-oriented grain decreases, resulting in deteriorated area fraction of cube orientation after the final annealing. Accordingly, the 0.2% proof stress in the rolling direction of the aluminum material after the intermediate annealing is preferably 25 to 100 MPa, more preferably 35 to 90 MPa.

A method for performing the aforementioned intermediate annealing is not specifically limited. For example, coiled aluminum material can be subjected to batch annealing, or when aluminum material is being rolled up on a winding coil while unwinding the aluminum material from an unwinding coil, the transferring aluminum material can be continuously annealed at between the unwinding coil and the winding coil.

Furthermore, the intermediate annealing and the application of tensile strain can be performed continuously. For example, as shown in Fig. 3, the aluminum material S to be transferred from the unwinding device 30 is supplied to the annealing furnace 37 to perform the intermediate annealing therein and subsequently supplied to the tensile strain application equipment 32 to apply tensile strain to the aluminum material S.

Furthermore, the application of tensile strain and the final annealing can be performed continuously. For example, as shown in Fig. 4, provided that the annealing furnace 37 is disposed at the downstream side of the tensile strain application equipment 32, the aluminum material S to be transferred from the unwinding device 30 is supplied to the tensile strain application equipment 32 to apply tensile strain to the aluminum material S and subsequently supplied to the annealing furnace 37 to perform the final annealing therein.

Furthermore, provided that annealing furnaces are disposed at the upstream and downstream sides of the tensile strain application equipment 32, intermediate annealing, tensile strain application and final annealing can be performed continuously.

As mentioned above, by continuously performing the intermediate annealing, the tensile strain application and the final annealing, it becomes possible to manufacture aluminum material efficiently.

At the time of applying tensile strain, or even before or after the application of tensile strain, compressive deformation of 5% or less in reduction can be given to the aluminum material. The compressive deformation can be performed by, for example, pinching the aluminum material which is being transferred from the unwinding coil to the winding coil with a pair of pinch rollers. This compressive deformation can be performed without using lubricant agent.

In the aforementioned tensile strain application step and compressive deformation giving step, no lubricant is required. Accordingly, it becomes possible to eliminate the degreasing step to be performed before the final annealing which was essential in a conventional manufacturing method in which second cold rolling is performed using lubricant after the intermediate annealing, resulting in simplified manufacturing steps. This also eliminates the use of degreasing agent and the administrative operation of a tank required for degreasing.

Deposits such as contaminants may exist on the surface of the aluminum material. Therefore, to obtain excellent etching characteristics, these deposits should be deleted by washing before subjecting the aluminum material to the final annealing. In this case too, since almost no lubricant will be brought from the aluminum material, the washing steps can be simplified, e.g., washing time can be shortened, and contamination and deterioration of the washing liquid can be prevented. Furthermore, since the step of applying tensile strain can be performed by itself or can be performed simultaneously with another step, the elimination of such deposits on the surface of the aluminum material and the application of tensile strain can be performed simultaneously.

In this invention, manufacturing conditions other than the tensile strain application conditions are not specifically limited. The hot rolling, the cold rolling and the final annealing can be performed under well known conditions. Furthermore, in the steps before the intermediate annealing, the elimination of contaminants or oil content on the surface of the aluminum material or the washing of them can be performed arbitrarily. As for the intermediate annealing, as previously explained, since the 0.2% proof stress of the aluminum material after the intermediate annealing is preferably 25 to 100 MPa, more preferably 30 to 90 MPa, conditions to obtain this are to be adjusted.

Furthermore, before subjecting an aluminum ingot to hot rolling, scalping for eliminating the ingot surface can be performed. In addition, before the hot rolling, homogenization treatment can be performed in accordance with common procedures.

In the aforementioned manufacturing steps, a method in which a tensile strain application equipment having bridle roll units is used to apply tensile strain is exemplified. However, it should be noted that the aforementioned explanations regarding the number of applying tensile strain, the number of passes, the continuous processing of the tensile strain application and the intermediate annealing, the continuous processing of the tensile strain application and the final annealing, the method of supplying the aluminum material to the tensile strain application step and the method of carrying out the aluminum material after the application of the tensile strain are not limited the case in which the tensile strain application equipment is used, and also can be applied to the case in which another tensile strain application equipment is used.

The chemical compositions of the aluminum ingot are not limited, and can be any compositions capable of being used for electrolytic capacitor electrodes. Concretely, in order to prevent deterioration of etching characteristics due to excessive dissolution by controlling the amount of impurities, the aluminum purity is preferably 99.8 mass% or more, more preferably 99.9 mass% or more. Furthermore, in order to improve the etching characteristics and strength, aluminum material to which various minor elements are added can also preferably be used.

The thickness of the aluminum material to be manufactured by the method of the present invention is 230 µm or less. Aluminum material having a thickness of 200 µm or less, which is called a foil, "can be used in the present invention. In the present invention, it is recommended that the thickness of the aluminum material after the final annealing be 110 to 230 µm because of the following reasons. That is, if the thickness is 110 µm or more, grains easily coarsen at the final annealing, which further enhances the application significance of the present invention. Conversely, if the thickness is less than 110 µm, the coarsening of grains will not become a problem even if the present invention is not applied. On the other hand, if the thickness of the aluminum material exceeds 230 µm, it becomes difficult to restrain the coarsening of grains even if the present invention is applied, which may results in the coarsened grains having a circle-equivalent diameter exceeding, e.g., 2 mm. The preferable lower limit of the thickness of the aluminum material after the final annealing is 115 µm, more preferably 120 µm. On the other hand, the preferable upper limit thereof is 210 µm, more preferably 200 µm.

The aluminum material manufactured in accordance with the present invention is subjected to etching to enlarge the surface increasing rate. Since the aluminum material is high in area fraction of cube orientation due to the application of tensile strain and the subsequent final annealing, the surface increasing rate can be improved by the etching. The aluminum material manufactured in accordance with the present invention can be used as negative electrode material and positive electrode material as well. Especially, the aluminum material can be preferably used as a positive electrode material since the aluminum material has a large effective area even if a voltage endurance film is formed by chemical forming after the etching. Furthermore, among the positive electrode materials, the aluminum material is preferably used as medium voltage or high voltage electrolytic capacitor electrode material. An electrolytic capacitor using the electrode material can have large capacitance.

### Examples

### [Example 1]

In manufacturing aluminum material, two types of aluminum ingots having compositions A and B as shown in Table 1 were used.

Initially, these aluminum ingots were subjected to homogenization treatment under the conditions of 610 °C x 10 hours (Ingot A) and 610 °C x 20 hours (Ingot B).

Next, the ingot was subjected to hot rolling and cold rolling, then intermediate annealing under the conditions shown in Table 2. The intermediate annealed material was cut into 100 mm x 300 mm test pieces. In Examples 1 to 8, tensile strain was applied to the test piece in the longitudinal direction with one axis tension tester. In Example 8, the test piece was subjected to compressive deformation of 1.1% reduction by passing through pinch rollers without using lubricant. On the other hand, in Comparative Examples 1 and 2, no tensile strain was applied. Thereafter, each test piece was subjected to final annealing under the conditions shown in Table 2.

As to each of the obtained aluminum materials after the final annealing, the thickness was measured, and the area fraction of cube orientation was investigated. These results are shown in Table 2. Example 1 was not manufactured according to the present invention.

**Table 1**

| Ingot NO. | Chemical compositions | | | | | | | | | |
|---|---|---|---|---|---|---|---|---|---|---|
| | (Unit: Al [mass%], another elements: [mass ppm]) | | | | | | | | | |
| | Si | Fe | Cu | Mn | Mg | Zn | Ti | B | Pb | Al |
| A | 23 | 16 | 49 | 1 | 1 | 10 | 1 | 1 | 0.6 | 99.98 or more |
| B | 46 | 60 | 18 | 2 | 5 | 12 | 1 | 4 | 0.7 | 99.98 or more |

| | Example | | | | | | | | Com. Ex. | |
|---|---|---|---|---|---|---|---|---|---|---|
| | 1 | 2 | 3 | 4 | 5 | 6 | 7 | 8 | 1 | 2 |
| Ingot Compositions | A | A | A | A | A | A | B | B | A | A |
| Intermediate annealing | 250°C x 20 h | | | | 250 °C x 10 h | | 300°C x 6 h | | 250°C x 20 h | 250°C x 10 h |
| Tensile strain (%) | 0.5 | 2.3 | 6.1 | 10.0 | 5.2 | 5.2 | 5.2 | 6.2 | - | - |
| Reduction by Compressive deformation (%) | - | - | - | - | - | - | - | 1.1 | - | - |
| Final annealing | 540°C x 4 h | | | | | | 550°C x 2 h | | 540°C x 4 h | |
| Thickness (µm) | 145 | 144 | 143 | 149 | 114 | 73 | 122 | 119 | 145 | 72 |
| Area fraction of cube orientation (%) | 78.4 | 92.6 | 99.1 | 99,9 | 98,7 | 86.8 | 95.6 | 88.7 | 49.4 | 55.4 |

As will be apparent from the results shown in Table 2, by applying tensile strain after the intermediate annealing, it was possible to obtain high area fraction of cube orientation without performing second cold rolling. Each area fraction of cube orientation was equivalent to the area fraction of cube orientation of conventional aluminum material manufactured by performing second cold rolling after intermediate annealing. Furthermore, since no lubricant agent was used in the tensile strain application step, it was not required to perform degreasing which was essential in a conventional manufacturing method, and aluminum material excellent in performance was manufactured through simplified steps.

### [Example 2]

An aluminum ingot having composition C as shown in Table 3 was subjected to homogenization treatment under the conditions of 610 °C x 10 hours.

Next, the ingot was subjected to hot rolling and cold rolling, then intermediate annealing. The conditions of the intermediate annealing was adjusted so that 0.2% proof stress of the aluminum material in the rolling direction after the intermediate annealing became to show the value shown in Table 4. For a tensile test to confirm the mechanical properties after the intermediate annealing, a test piece of 10 mm in width and 200 mm in length obtained by cutting the aluminum material after the intermediate annealing was used.

Next, the aluminum material after the intermediate annealing was cut into 100 mm x 300 mm test pieces with the longitudinal direction parallel to the rolling direction. In Examples 11 to 24 and Comparative Example 14, tensile strain was applied to the test piece in the longitudinal direction thereof with one axis tension tester. On the other hand, in Comparative Example 11, no tensile strain was applied. In Comparative Examples 12 and 13, after the intermediate annealing, the test piece was subjected to cold rolling at the rolling reduction shown in Table 4 without applying tensile stain.

Subsequently, each test piece was subjected to final annealing for holding 10 hours at 500 °C to obtain the aluminum material having a thickness shown in Table 4.

Each obtained aluminum material after the final annealing was immersed in a solution having a volume ratio of hydrochloric acid: nitric acid: hydrofluoric acid=50: 47: 3 to grow grains, and then the area fraction of cube orientation and the existence of coarsened grains were investigated. The existence of coarsened grains was judged by whether or not grains having circle-equivalent diameter of over 2 mm with respect to the area of the grain exist when the surface of the aluminum material was observed. These results are shown in Table 4. Example 16 was not manufactured according to the present invention.

**Table 3**

| Ingot No. | Chemical compositions | | | | | | |
|---|---|---|---|---|---|---|---|
| | (Unit: Al [mass%], another elements: [mass ppm]) | | | | | | |
| | Si | Fe | Cu | Zn | Ga | Pb | Al |
| C | 23 | 15 | 51 | 11 | 8 | 0.61 | 99.98 or more |

| | Example | | | | | | | | | | | | | | Comparative Example | | | |
|---|---|---|---|---|---|---|---|---|---|---|---|---|---|---|---|---|---|---|
| | 11 | 12 | 13 | 14 | 15 | 16 | 17 | 18 | 19 | 20 | 21 | 22 | 23 | 24 | 11 | 12 | 13 | 14 |
| Ingot composition | c | c | c | c | c | c | c | c | c | c | c | c | c | c | c | c | c | c |
| 0.2 proof stress after intermediate annealing | 70 | 40 | 43 | 86 | 84 | 39 | 39 | 39 | 59 | 89 | 26 | 95 | 24 | 104 | 39 | 39 | 40 | 72 |
| Tensile strain (%) | 5.2 | 6.0 | 6.5 | 5.2 | 8.0 | 0.5 | 1.0 | 3.3 | to | 5.2 | 6.0 | 5.2 | 6.5 | 5.1 | - | - | - | 6.0 |
| Cold rolling reduction (%) | - | - | - | - | - | - | - | - | - | - | - | - | - | - | - | 19 | 25 | - |
| Thickness (µm) | 112 | 145 | 175 | 208 | 2Z3 | 145 | 145 | 141 | 149 | 150 | 145 | 150 | 152 | 151 | 146 | 149 | 220 | 240 |
| Area fraction of cube orientation (%) | 99.2 | 99.1 | 99.2 | 99.8 | 99.1 | 86.7 | 93.2 | 98.0 | 99.9 | 99.1 | 95.9 | 97.3 | 91.6 | 93.7 | 76.7 | 972 | 80.8 | 653 |
| Existence of coarsened grains | Nil | Nil | Nil | Nil | Nil | Nil | Nil | Nil | Nil | Nil | Nil | Nil | Nil | Nil | Nil | Yes | Yes | Yes |

As will be apparent from the results shown in Table 4, in Examples 11 to 24, by applying tensile strain after the intermediate annealing, it was possible to obtain high area fraction of cube orientation without performing cold rolling after the intermediate annealing. Furthermore, no existence of coarsened grains was confirmed.

On the other hand, in Comparative Example 11 in which tensile strain application and cold rolling were not performed after the intermediate annealing, the area fraction of cube orientation was low. Furthermore, in Comparative Examples 12 and 13 according to a conventional method in which cold rolling is performed without applying tensile strain after the intermediate annealing, coarsened grains were confirmed. Furthermore, in Comparative Example 14 in which the thickness exceeds 230 pm, coarsened grains were confirmed though tensile strain was applied after the intermediate annealing.

### [Example 3]

In this example, tensile strain was applied to coiled material after the intermediate annealing using a tensile strain application equipment 1 as shown in Fig. 1.

This tensile strain application equipment 1 is a tension leveling device having two bridle roll units 10 and 11 disposed at the upstream side and the downstream side of the aluminum material S. Each unit 10 and 11 is constituted by four bridle rolls 12 and 13, respectively.

In manufacturing aluminum material, first, each ingot having the composition D, E and F shown in Table 5 was subjected to homogenization treatment of 610 °C x 10 hours.

Next, the ingot was subjected to hot rolling and cold rolling, and then to intermediate annealing to thereby obtain coiled material with a width of 1030 mm. The conditions of the intermediate annealing was adjusted so that 0.2% proof stress of the aluminum material in the rolling direction after the intermediate annealing became to show the value shown in Table 6. For a tensile test to confirm the mechanical properties after the intermediate annealing, a test piece of 10 mm in width and 200 mm in length obtained by cutting the aluminum material after the intermediate annealing was used.

Tensile strain was applied to the coiled material S after the intermediate annealing by differentiating the peripheral speed Pi of the upstream side bridle roll unit 10 and the peripheral speed Po of the downstream side bridle roll unit 11 and further setting (Po-Pi)/Pi to the value shown in Table 6 using the tensile strain application equipment 1. In Examples 31 to 34, (Po-Pi)/Pi was set by changing the rotational speed of the bridle rolls 12 and 13. In Examples 35 and 36, the same was set by changing the roll diameters of the bridle rolls 12 and 13. In Example 37, the same was set by changing both the rotational speed and the roll diameters. Furthermore, the transferring speed of the aluminum material S and the number of pass to apply the tensile strain were set as shown in Table 6 to thereby eventually apply the tensile strain (%) shown in Table 6.

The aluminum material to which tensile strain was applied was wound into coils each having a width of 500 mm, and subjected to final annealing of 500 ° C x 10 hours in an argon atmosphere to thereby obtain the aluminum material having the thickness shown in Table 6.

A test piece with a width of 500 mm and length of 200 mm was obtained from the aluminum material after the final annealing. The test piece was immersed in a solution having a volume ratio of hydrochloric acid: nitric acid: hydrofluoric acid-50 : 47: 3 to grow grains, and then the area fraction of cube orientation of the surface and the existence of coarsened grains were investigated using an image analysis apparatus. The existence of coarsened grains was judged by whether or not grains having circle-equivalent diameter of over 2 mm with respect to the area of the grain exist when the surface of the aluminum was observed. These results are shown in Table 6.

**Table 5**

| Ingot No. | Chemical compositions (Unit: Al [mass%], another elements: [mass ppm]) | | | | | | |
|---|---|---|---|---|---|---|---|
| | Si | Fe | Cu | Zn | Ga | Pb | Al |
| D | 23 | 15 | 51 | 11 | 8 | 0.6 | 99.98 or more |
| E | 20 | 13 | 58 | 10 | 9 | 0.6 | 99.98 or more |
| F | 10 | 9 | 36 | 9 | 1 | 1.0 | 99.99 or more |

**Table 6**

| | Example | | | | | | |
|---|---|---|---|---|---|---|---|
| | 31 | 32 | 33 | 34 | 35 | 36 | 37 |
| ingot composition | D | D | D | D | E | E | F |
| 0.2% proof stress after Intermediate annealing | 39 | 39 | 39 | 41 | 62 | 31 | 57 |
| (Po-Pi)/Pi | 0.009 | 0.009 | 0.009 | 0.009 | 0.045 | 0.087 | 0.041 |
| Number of pass | 2 | 4 | 6. | 6 | 2 | 1 | 2 |
| Transferring speed (m/min) | 80 | 80 | 80 | 80 | 90 | 80 | 90 |
| Tensile strain (%) strain | 1.4 | 3.3 | 4.1 | 4.3 | 7.6 | 7.8 | 7.0 |
| Thickness (µm) | 144 | 141 | 140 | 111 | 113 | 113 | 121 |
| Area fraction of cube orientation (%) | 97.6 | 97.6 | 99.0 | 98.0 | 99.7 | 99.4 | 99.4 |
| Existence of coarsened grains | Nil | Nil | Nil | Nil | Nil | Nil | Nil |

As will be apparent from the results shown in Table 6, by applying tensile strain after the intermediate annealing, it was possible to obtain high area fraction of cube orientation without performing cold rolling after the intermediate annealing. Furthermore, no existence of coarsened grains was confirmed. Furthermore, by using a tensile strain application equipment with bridle roll units, tensile strain was effectively applied to the coiled material.

While the present invention may be embodied in many different forms, a number of illustrative embodiments are described herein with the understanding that the present disclosure is to be considered as providing examples of the principles of the invention and such examples are not intended to limit the invention to preferred embodiments described herein and/or illustrated herein.

### Industrial Applicability

With the method according to the present invention, it is possible to stably obtain aluminum material for electrolytic capacitor electrodes having high area fraction of cube orientation and capable of restraining coarsening of grains. Accordingly, by subjecting this aluminum material to etching, the surface increasing rate can be increased to thereby increase the capacitance, resulting in a small and high performance electrolytic capacitor electrode, which in turn can provide a small and high performance electronics device having the electrolytic capacitor.

## Claims

1. A method for manufacturing aluminium material for electrolytic capacitor electrodes, wherein an aluminium ingot is subjected to hot rolling, cold rolling and then intermediate annealing to obtain a rolled article, **characterized in that** tensile strain within the range of 1 to 15 % is applied to the rolled article without subjecting the rolled article to cold rolling after the intermediate annealing but before initiation of final annealing, and thereafter the rolled article is subjected to final annealing, wherein the thickness of the aluminium material after final annealing is 230 µm or less.

2. The method for manufacturing aluminium material for electrolytic capacitor electrodes as claimed in claim 1, wherein the tensile strain falls within the range of 3 to 12 %.

3. The method for manufacturing aluminium material for electrolytic capacitor electrodes as claimed in claim 1 or 2, wherein application of the tensile strain is performed using a tensile strain application equipment having two or more bridle roll units disposed in a transferring direction of the aluminium material for forming a tension applying area between adjacent bridle roll units in such a manner that between a peripheral speed Pi of an upstream-side bridle roll unit and a peripheral speed Po of a downstream-side bridle roll a peripheral speed difference of Pi<Po is provided so as to continuously generate plastic strain in the tension applying area.

4. The method for manufacturing aluminium material for electrolytic capacitor electrodes as claimed in claim 3, wherein the peripheral speeds Pi and Po meet a relation of 0<(Po-Pi)/Pi ≤ 0.1.

5. The method for manufacturing aluminium material for electrolytic capacitor electrodes as claimed in claim 3 or 4, wherein the peripheral speed difference is generated by driving bridle rolls of the upstream-side bridle roll unit and those of the downstream-side bridle roll unit at different rotational speeds.

6. The method for manufacturing aluminium material for electrolytic capacitor electrodes as claimed in any one of claims 3 to 5, wherein the peripheral speed difference is generated by employing bridle rolls of the downstream-side bridle roll unit with a larger bridle roll diameter than a bridle roll diameter of bridle rolls of the upstream-side bridle roll unit.

7. The method for manufacturing aluminium material for electrolytic capacitor electrodes as claimed in any one of claims 1 to 6, wherein the tensile stain is applied at two positions or more in one pass for applying the tensile strain.

8. The method for manufacturing aluminium material for electrolytic capacitor electrodes as claimed in any one of claims 1 to 7, wherein the pass for applying the tensile strain is carried out a plurality of times.

9. The method for manufacturing aluminium material for electrolytic capacitor electrodes as claimed in any one of claims 3 to 8, wherein the tensile strain application equipment is a tension leveling device.

10. The method for manufacturing aluminium material for electrolytic capacitor electrodes as claimed in any one of claims 1 to 9, wherein the intermediate annealing and an application of the tensile strain are performed continuously.

11. The method for manufacturing aluminium material for electrolytic capacitor electrodes as claimed in any one of claims 1 to 10, wherein an application of the tensile strain and the final annealing are performed continuously.

12. The method for manufacturing aluminium material for electrolytic capacitor electrodes as claimed in any one of claims 1 to 11, wherein the method manufactures the aluminium material having a thickness of 110 to 230 µm.

13. The method for manufacturing aluminium material for electrolytic capacitor electrodes as claimed in any one of claims 1 to 12, wherein the aluminium material is positive electrode material.

14. The method for manufacturing aluminium material for electrolytic capacitor electrodes as claimed in any one of claims 1 to 13, wherein the aluminium material is medium and high voltage positive electrode material.

## Patentansprüche

1. Verfahren zum Herstellen von Aluminium-Material für Elektrolytkondensator-Elektroden, wobei ein Aluminium-Rohblock einem Warmwalzen, Kaltwalzen und dann einem Zwischenglühen unterzogen wird, um einen gewalzten Gegenstand zu erhalten, **dadurch gekennzeichnet, dass** nach dem Zwischenglühen jedoch vor dem Beginnen des Fertigglühens Zugbelastung im Bereich von 1% bis 15% auf den gewalzten Gegenstand aufgebracht wird, ohne dass der gewalzte Gegenstand einem Kaltwalzen unterzogen wird, und anschließend der gewalzte Gegenstand dem Fertigglühen unterzogen wird, wobei die Dicke des Aluminium-Materials nach dem Fertigglühen 230 µm oder weniger beträgt.

2. Verfahren zum Herstellen von Aluminium-Material für Elektrolytkondensator-Elektroden gemäß Anspruch 1, wobei die Zugbelastung im Bereich von 3% bis 12% liegt.

3. Verfahren zum Herstellen von Aluminium-Material für Elektrolytkondensator-Elektroden gemäß Anspruch 1 oder 2, wobei das Aufbringen der Zugbelastung mittels einer Zugbelastungs-AufbringVorrichtung durchgeführt wird, die zwei oder mehr Spannrollen-Einheiten aufweist, die in einer Transportrichtung des Aluminiummaterials angeordnet sind zum Ausbilden eines Spannungs-Aufbring-Bereichs zwischen benachbarten Spannrollen-Einheiten derart, dass zwischen einer Umfangsgeschwindigkeit Pi einer stromaufwärtsseitigen Spannrollen-Einheit und einer Umfangsgeschwindigkeit Po einer stromabwärtsseitigen Spannrollen-Einheit eine Umfangsgeschwindigkeitsdifferenz von Pi<Po bereitgestellt wird, um in dem Spannungs-Aufbring-Bereich durchgehend plastische Dehnung zu erzeugen.

4. Verfahren zum Herstellen von Aluminium-Material für Elektrolytkondensator-Elektroden gemäß Anspruch 3, wobei die Umfangsgeschwindigkeiten Pi und Po einem Verhältnis von 0<(Po-Pi)/Pi≤0,1 entsprechen.

5. Verfahren zum Herstellen von Aluminium-Material für Elektrolytkondensator-Elektroden gemäß Anspruch 3 oder 4, wobei die Umfangsgeschwindigkeitsdifferenz durch das Antreiben von Spannrollen der stromaufwärtsseitigen Spannrollen-Einheit und denjenigen der stromabwärtsseitigen Spannrollen-Einheit mit unterschiedlichen Drehgeschwindigkeiten erzeugt wird.

6. Verfahren zum Herstellen von Aluminium-Material für Elektrolytkondensator-Elektroden gemäß einem der Ansprüche 3 bis 5, wobei die Umfangsgeschwindigkeitsdifferenz durch Verwenden von Spannrollen der stromabwärtsseitigen Spannrollen-Einheit mit einem größeren Spannrollen-Durchmesser als einem Spannrollen-Durchmesser von Spannrollen der stromaufwärtsseitigen Spannrollen-Einheit erzeugt wird.

7. Verfahren zum Herstellen von Aluminium-Material für Elektrolytkondensator-Elektroden gemäß einem der Ansprüche 1 bis 6, wobei die Zugbelastung an zwei oder mehr Positionen in einem Arbeitsgang zum Aufbringen der Zugbelastung aufgebracht wird.

8. Verfahren zum Herstellen von Aluminium-Material für Elektrolytkondensator-Elektroden gemäß einem der Ansprüche 1 bis 7, wobei der Arbeitsgang zum Aufbringen der Zugbelastung mehrere Male durchgeführt wird.

9. Verfahren zum Herstellen von Aluminium-Material für Elektrolytkondensator-Elektroden gemäß einem der Ansprüche 3 bis 8, wobei die Zugbelastungs-Aufbring-Vorrichtung eine Spannungsausgleichsvorrichtung ist.

10. Verfahren zum Herstellen von Aluminium-Material für Elektrolytkondensator-Elektroden gemäß einem der Ansprüche 1 bis 9, wobei das Zwischenglühen und ein Aufbringen der Zugbelastung durchgehend durchgeführt werden.

11. Verfahren zum Herstellen von Aluminium-Material für Elektrolytkondensator-Elektroden gemäß einem der Ansprüche 1 bis 10, wobei ein Aufbringen der Zugbelastung und das Fertigglühen durchgehend durchgeführt werden.

12. Verfahren zum Herstellen von Aluminium-Material für Elektrolytkondensator-Elektroden gemäß einem der Ansprüche 1 bis 11, wobei das Verfahren das Aluminium-Material mit einer Dicke von 110 µm bis 230 µm herstellt.

13. Verfahren zum Herstellen von Aluminium-Material für Elektrolytkondensator-Elektroden gemäß einem der Ansprüche 1 bis 12, wobei das Aluminium-Material positives Elektrodenmaterial ist.

14. Verfahren zum Herstellen von Aluminium-Material für Elektrolytkondensator-Elektroden gemäß einem der Ansprüche 1 bis 13, wobei das Aluminium-Material Mittelspannungs- und Hochspannungs- Positiv-Elektrodenmaterial ist.

## Revendications

1. Procédé de fabrication d'un matériau d'aluminium pour des électrodes de condensateur électrolytique, dans lequel un lingot d'aluminium est soumis à un laminage à chaud, un laminage à froid et ensuite à un recuit intermédiaire pour obtenir un article laminé, **caractérisé en ce qu'**une tension de traction dans le domaine de 1 % à 15 % est appliquée à l'article laminé sans soumettre l'article laminé à un laminage à froid après un recuit intermédiaire mais avant l'initiation du recuit final, et ensuite l'article laminé est soumis à un recuit final, l'épaisseur du matériau d'aluminium après le recuit final étant de 230 µm ou moins.

2. Procédé de fabrication d'un matériau d'aluminium pour des électrodes de condensateur électrolytique selon la revendication 1, dans lequel la tension de traction est comprise dans le domaine de 3 % à 12 %.

3. Procédé de fabrication d'un matériau d'aluminium pour des électrodes de condensateur électrolytique selon la revendication 1 ou 2, dans lequel l'application de la tension de traction est réalisée en utilisant un équipement d'application de tension de traction ayant deux ou plusieurs unités de rouleau tensionneur disposées dans une direction de transfert du matériau d'aluminium pour former une région d'application de tension entre des unités de rouleau tensionneur adjacentes d'une telle manière qu'entre une vitesse périphérique Pi d'une unité de rouleau tensionneur en amont et une vitesse périphérique Po d'un rouleau tensionneur en aval une différence de vitesse périphérique de Pi < Po est prévue afin de générer de manière continue une déformation plastique dans la région d'application de tension.

4. Procédé de fabrication d'un matériau d'aluminium pour des électrodes de condensateur électrolytique selon la revendication 3, dans lequel les vitesses périphériques Pi et Po satisfont la relation 0 < (Po-Pi)/Pi ≤0,1.

5. Procédé de fabrication d'un matériau d'aluminium pour des électrodes de condensateur électrolytique selon la revendication 3 ou 4, dans lequel la différence de vitesse de périphérique est générée par l'entraînement des rouleaux tensionneur de l'unité de rouleau tensionneur en amont et ceux de l'unité de rouleau tensionneur en aval à différentes vitesses de rotation.

6. Procédé de fabrication d'un matériau d'aluminium pour des électrodes de condensateur électrolytique selon l'une quelconque des revendications 3 à 5, dans lequel la différence de vitesse de périphérique est générée par l'emploi de rouleaux tensionneur de l'unité de rouleau tensionneur en aval avec un diamètre de rouleau tensionneur plus grand qu'un diamètre de rouleau tensionneur des rouleaux tensionneur de l'unité de rouleau tensionneur en amont.

7. Procédé de fabrication d'un matériau d'aluminium pour des électrodes de condensateur électrolytique selon l'une quelconque des revendications 1 à 6, dans lequel la tension de traction est appliquée à deux positions ou plus dans une passe pour appliquer la tension de traction.

8. Procédé de fabrication d'un matériau d'aluminium pour des électrodes de condensateur électrolytique selon l'une quelconque des revendications 1 à 7, dans lequel la passe pour appliquer la tension de traction est réalisée une pluralité de fois.

9. Procédé de fabrication d'un matériau d'aluminium pour des électrodes de condensateur électrolytique selon l'une quelconque des revendications 3 à 8, dans lequel l'équipement d'application de tension de traction est un dispositif de nivellement de tension.

10. Procédé de fabrication d'un matériau d'aluminium pour des électrodes de condensateur électrolytique selon l'une quelconque des revendications 1 à 9, dans lequel le recuit intermédiaire et une application de la tension de traction sont réalisées de manière continue.

11. Procédé de fabrication d'un matériau d'aluminium pour des électrodes de condensateur électrolytique selon l'une quelconque des revendications 1 à 10, dans lequel une application de la tension de traction et le recuit final sont réalisés de manière continue.

12. Procédé de fabrication d'un matériau d'aluminium pour des électrodes de condensateur électrolytique selon l'une quelconque des revendications 1 à 11, dans lequel le procédé fabrique le matériau d'aluminium ayant une épaisseur de 110 µm à 230 µm.

13. Procédé de fabrication d'un matériau d'aluminium pour des électrodes de condensateur électrolytique selon l'une quelconque des revendications 1 à 12, dans lequel le matériau d'aluminium est un matériau d'électrode positive.

14. Procédé de fabrication d'un matériau d'aluminium pour des électrodes de condensateur électrolytique selon l'une quelconque des revendications 1 à 13, dans lequel le matériau d'aluminium est un matériau d'électrode positive de moyenne et haute tension.
